(19) Europäisches Patentamt
European Patent Office
Office européen des brevets

(11) **EP 3 639 669 B1**

(12) **EUROPÄISCHE PATENTSCHRIFT**

(45) Veröffentlichungstag und Bekanntmachung des Hinweises auf die Patenterteilung:
**10.05.2023** **Patentblatt 2023/19**

(21) Anmeldenummer: **19211499.9**

(22) Anmeldetag: **10.03.2010**

(51) Internationale Patentklassifikation (IPC):
**B29K 101/12** (2006.01)   **B29L 23/00** (2006.01)
**B29L 31/00** (2006.01)   **A22C 13/00** (2006.01)
**B29C 53/08** (2006.01)   **B29C 53/12** (2006.01)
**B29C 53/84** (2006.01)

(52) Gemeinsame Patentklassifikation (CPC):
**A22C 13/0003; B29C 53/083; B29C 53/12; B29C 53/84;** A22C 2013/0059; B29K 2101/12; B29L 2023/005; B29L 2031/712

(54) **VORRICHTUNG UND VERFAHREN ZUR HERSTELLUNG EINER VERKRANZTER SCHLAUCHHÜLLE MIT GLEICHMÄSSIGER HÜLLENDICKE**

DEVICE AND METHOD FOR PRODUCING A RINGED TUBULAR CASING WITH EQUAL CASING THICKNESS

DISPOSITIF ET PROCÉDÉ DE FABRICATION GAINE EN BOYAU COURBÉE DOTÉE D'UNE ÉPAISSEUR DE GAINE RÉGULIÈRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**22.04.2020** **Patentblatt 2020/17**

(73) Patentinhaber: **Kolotech Fertigungstechniken GmbH**
**49326 Melle (DE)**

(72) Erfinder: **KOLODZIEJ, Wolfgang**
**49326 Melle (DE)**

(74) Vertreter: **Dekker, Lothar Karl Rudolf**
**Patent- und Rechtsanwaltskanzlei Dekker PartGmbB**
**Friedensheimer Straße 26**
**27729 Vollersode (DE)**

(56) Entgegenhaltungen:
**EP-A1- 0 744 273**      **DE-A1- 19 607 340**
**DE-A1- 19 650 873**      **DE-C- 650 526**
**US-A- 4 356 201**

Bemerkungen:
Diese Anmeldung ist am 26.11.2019 als neue europäische Patentanmeldung gemäß Artikel 61(1)b) EPÜ zur früheren Anmeldung 10002469 eingereicht worden.

**Beschreibung**

Die vorliegende Erfindung betrifft eine Vorrichtung zur Herstellung von gekranzten Schlauchhüllen, insbesondere für Nahrungsmittel, mit gleichmäßiger Hüllendicke bezogen auf den Kaliberumfang sowie ein Verfahren zum Herstellen solcher Schlauchhüllen.

Bei der industriellen Brüh- und Kochwurstherstellung haben sich biaxial gereckte Kunststoffhüllen auf der Basis Polyamid (PA) in vielerlei Hinsicht seit Jahren in gerader und auch in gekranzter Form bewährt. Insbesondere mehrschichtige Hüllen mit größer gleich 3 Schichten, die uniaxial oder biaxial verstreckt wurden, eignen sich für diese Anforderungen hervorragend.

In der DE 43 39 337 wird eine fünfschichtige, biaxial verstreckte Schlauchfolie zur Verpackung und Umhüllung von Lebensmitteln beschrieben. Diese Hülle ist dadurch gekennzeichnet, dass sie aus einer inneren und äußeren Schicht aus dem gleichen Polyamidmaterial und einer mittleren Polyolefinschicht sowie zwei aus dem gleichen Material bestehenden Haftvermittlerschichten aufgebaut ist.

In der EP 530 538 wird eine fünfschichtig coextrudierte biaxial gereckte Schlauchfolie mit mindestens 3 PA-Schichten beschrieben, wobei zwischen den innen und außenliegenden PA-Schichten Polymerschichten mit wasserdampf- und sauerstoffsperrenden Charakter eingebunden sind.

In der DE19650873A1 wird ein Verfahren beschrieben, bei dem der aufgeblasene Kunststoffdarm in einem Wendelbereich von 360 ° von außen und von innen über bestimmte angepasste Rollen geführt und dort verformt wird. In der Druckschrift wird weiter beschrieben, dass die Schlauchhülle von der Innenseite des Kranzes also radial von innen nach außen erwärmt wird. Nach Verlassen der 360 ° Wendel hat der Darm seine Kranzform erreicht.

In der EP0878318A1 wird ein bedruckter Darm beschrieben der mit positiv, d.h. vergrößert, verzerrtem Druckmotiv bedruckt wurde, um nach dem Kranzen, bei dem der Darm schrumpft, wieder seine unverzerrte Form zu bekommen.

In der EP0744273A1 wird ein kontinuierliches Kranzverfahren beschrieben bei dem die Verformung der Schlauchhülle dadurch erreicht wird, dass der Überdruck für den aufgeblasene Schlauchhülle zwischen zwei Quetschwalzenpaare gehalten und die Schlauchhülle in dem Kranzwerkstück über in sich drehende Stangen verformt wird.

Die DE19607340A1 beschreibt ein Verfahren, bei dem die komplette Rolle von ca. 1000 m im aufgeblasenen Zustand aufgerollt und anschließend beim Abrollen über ein heißes, drehendes Ofenrohr gezogen wird und so seine Kranzform erhält.

Bei den Verfahren zum Kranzen von Schlauchhüllen nach dem Stand der Technik gibt es mindestens zwei wesentliche Nachteile: Alle genannten Verfahren beruhen auf dem Schrumpfungsprinzip, d.h. die Verformung wird so vollzogen, dass die Schlauchhülle auf einer Seite schrumpft und somit kürzer wird. Dabei erhält die kürzere Seite der gekranzten Schlauchhülle eine größere Schichtdicke. Solche Schlauchhüllen haben somit ungleichmäßige Schichtdicken bezogen auf den Kaliberumfang. Die unterschiedlichen Dicken über den Umfang haben zur Folge, dass unterschiedliche Durchlässigkeiten der Hülle gegeben sind. Weiterhin geht mit dem Schrumpfprozess eine Verkürzung der nutzbaren Länge einher, so dass beim Kranzprozess ein Teil der eingeflossenen Länge für den Kunden bzw. für den weiteren Verarbeitungsschritt nicht nutzbar ist.

Ziel der vorliegenden Erfindung war es, gekranzte Schlauchhüllen herzustellen, die bezogen auf den Kaliberumfang eine relativ gleichmäßige Dicke aufweisen. Weiterhin sollen die Sperr- bzw. Durchlässigkeitseigenschaften über den Umfang der Hülle möglichst gleich sein. Aus wirtschaftlichen Gründen sollte die nutzbare Schlauchlänge durch das Kranzverfahren nicht verkürzt werden.

Gelöst wird diese Aufgabe durch eine gleichzeitige Dehnung der Schlauchhülle über den ganzen oder zumindest fast den ganzen Kaliberumfang beim Kranzprozess. Die Krümmung des Darms wird an allen Stellen des Umfangs neben üblichen Erwärmen durch zusätzliche Dehnung der Hülle erreicht. Nach der Dehnung ist dann die Schlauchdicke an allen Stellen des Umfanges im Wesentlichen gleich. Zum Kranzen kann eine an sich bekannte Kranzvorrichtung aus dem Stand der Technik, z.B. aus DE19650873A1, verwendet werden, die so modifiziert und betrieben wird, dass eine zusätzliche Dehnung auf die Hülle ausgeübt wird.

Gegenstand der Erfindung ist somit eine Vorrichtung gemäß Anspruch 1 sowie ein Verfahren gemäß Anspruch 4 zum Herstellen einer gekranzten Schlauchhülle mit gleichmäßiger Schichtdicke über ihren ganzen Kaliberumfang mittels einer ein Kranzwerkzeug umfassenden Kranzvorrichtung, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird, dadurch gekennzeichnet, dass mittels Kraftübertragung durch die Führungsrollen zusätzlich ein solcher Zug auf die Schlauchhülle ausgeübt wird, dass diese insgesamt gestreckt wird. Die Wärmebehandlung des durch die Kranzvorrichtung geführten Schlauches erfolgt vorzugsweise durch an die Innenseite der Schlauchwendel herangeführte Heißluft und gleichmäßiges Verteilen der Heißluft über den Umfang der Schlauchhülle.

Zusätzlich kann bei der erfindungsgemäß modifizierten und betriebenen Anlage im Gegensatz zum Stand der Technik mit einer Vorheizung des Hüllenmaterials vor dem Einlaufen in das Kranzwerkzeug und/oder mit einer gezielten Erwärmung auch von außen innerhalb des Kranzwerkzeuges gearbeitet werden. Bevorzugt ist, dass die Schlauchhülle sowohl vorgeheizt als auch innerhalb des Kranzwerkzeuges von außen erwärmt wird. Durch diese Maßnahmen - in Kombination mit dem ausgeübten Zug - gelingt es überraschenderweise, den Darm über den kompletten Kaliberumfang zu dehnen. Das ist insofern erstaunlich, da auf der Innenseite des gekranzten Darmes deutlich weniger als auf der Außenseite des gekranzten Darmes in Längsrichtung gedehnt wird. Trotz dieses unterschiedlichen Längsdehnungsverhaltens wird nach dem Verlassen eine gleichmäßige Dicke über den Umfang des Darmes erreicht. Offenbar findet eine Materialverschiebung quer zur Längsseite des Darms statt.

Die Vorheizung kann den Darm in bestimmten Sektionen um den Umfang oder über den gesamten Umfang umschließen, z.B. in einer abgeteilten Ringform oder in einer geschlossenen Ringform. Ein umschlossener Ring kann aus einem Hohlraum bestehen, der mit einem Lochgitter zum Darm ausgeführt ist. Dieser Hohlraum wird mit warmer Luft beaufschlagt, die durch das Lochgitter zum Darm gelangt. Die Vorheizung vor dem Einlaufen in das Kranzwerkzeug und auch die gezielte Aufheizung von außen innerhalb des Kranzwerkzeuges kann mit warmer Luft oder auch mit Infrarot-Strahlung durchgeführt werden.

Der erfindungsgemäße mittels Kraftübertragung durch die Führungsrollen zusätzlich ausgeübte Zug kann z.B. dadurch bewirkt werden, dass das Kranzwerkzeug inklusive der Führungsrollen mehr als nur eine Wendel von ca. 1 × 360 Grad Länge umfasst, die im Stand der Technik vorgesehen sind. Bevorzugt ist das Kranzwerkzeug so konstruiert, dass die die Führungsrollen umfassende Wendel eine Länge von 400 bis 700 Grad oder sogar mehr umfasst. Zusätzlich können die Führungsrollen eine reibfähige Oberfläche aufweisen oder insgesamt aus einem reibfähigen Material aufgebaut sein.

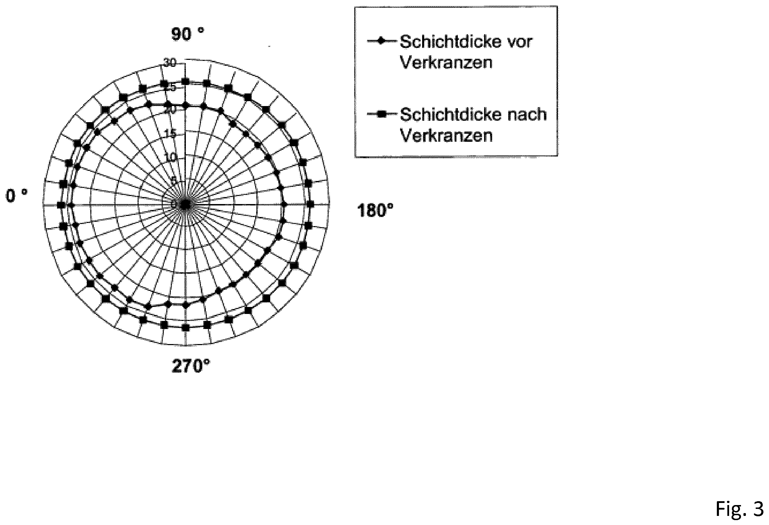

Durch das erfindungsgemäße Verfahren bzw. die erfindungsgemäße Modifizierung und der erfindungsgemäße Betrieb der Kranzvorrichtung wird bevorzugt erreicht, dass die Schlauchhülle das Kranzwerkzeug mit einer auf den Kaliberumfang bezogenen gleichmäßigen Hüllendicke verlässt. "Gleichmäßige Hüllendicke" bedeutet dabei, dass bei mindestens 30 in jeweils gleichem Abstand über den Kaliberumfang verteilten Messungen der Hüllendicke der Durchschnitt der 5 höchsten Werte der Dicke höchstens 1,28-fach, bevorzugt höchstens 1,25-fach, besonders bevorzugt höchstens 1,22-fach, über dem Durchschnitt der 5 niedrigsten Werte der Dicke liegt. Vergleiche hierzu auch Figur 3 und Tabelle 1.

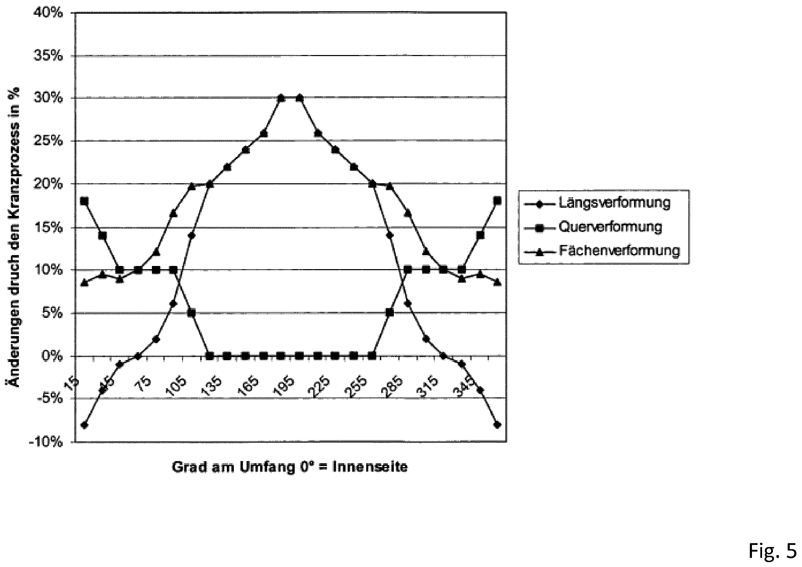

Durch das erfindungsgemäße Verfahren bzw. den erfindungsgemäßen Betrieb einer Kranzvorrichtung wird bevorzugt auch erreicht, dass die Schlauchhülle das Kranzwerkzeug mit einer Längsverformung verlässt, die größer -30%, bevorzugt größer -20%, besonders bevorzugt größer -10%, ist. Dabei bezieht sich die Angabe der Längsverformung relativ auf die Länge der unverkranzt eingesetzten Hülle. Außerdem gilt hier, dass die genannten Verformungswerte für jeden auf dem Kaliberumfang liegenden Abschnitt zutreffen. Wie die Figur 5 anschaulich zeigt, werden negative Längsverformungen (Längsschrumpf) aber praktisch nur im innenliegenden Bereich (z.B. 0-60° und 300-360°) des Kaliberumfanges erzielt. Im größtem Bereich des Kaliberumfanges (z.B. 60-300°) werden nach dem erfindungsgemäßen Verfahren positive Werte für die Längsverformung (Längsdehnung) erzielt (z.B. Werte von bis +30% in Figur 5).

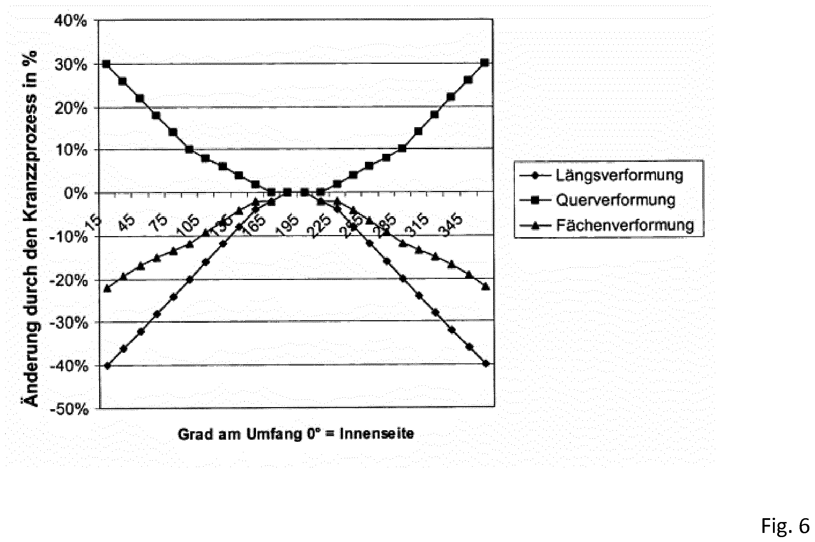

Durch das erfindungsgemäße Verfahren wird in der Regel auch erreicht, dass die Schlauchhülle das Kranzwerkzeug mit einer Querverformung verlässt, die größer - 10%, bevorzugt größer -5%, besonders bevorzugt größer oder gleich 0%, ist. Dabei bezieht sich die Angabe der Querverformung relativ auf die Länge eines Abschnitts auf dem Kaliberumfang der unverkranzt eingesetzten Hülle. Außerdem gilt auch hier, dass die genannten Verformungswerte für jeden auf dem Kaliberumfang liegenden Abschnitt zutreffen. Figur 5 zeigt auch anschaulich, dass negative Querverformungen (Querschrumpf) aber praktisch nicht auftritt. Im außenliegenden Bereich des Kaliberumfanges (z.B. etwa 110-250° in Figur 5) liegen die Werte für die Querverformung um 0%. Im innenliegenden Bereich (z.B. 0-60° und 300-360°) werden z.B. Werte von +10 bis +18% (Querdehnung) erreicht. Wie ein Vergleich mit Figur 6 zeigt, werden ähnliche Werte und Verteilungen der Querdehnung auch bei gekranzten Hüllen erzielt, die nach herkömmlichem Verfahren gekranzt wurden.

Bezüglich der Flächenreckung ist festzustellen, dass die Schlauchhülle das Kranzwerkzeug bevorzugt mit einer Flächenverformung in jedem auf dem Kaliberumfang liegenden Abschnitt und bezogen auf die unverkranzt eingesetzte Hülle von größer - 10% (Flächenschrumpf), bevorzugt größer 0%, besonders bevorzugt größer 5% (Flächenreck), verlässt. Figur 5 zeigt zum Beispiel, dass eine negative Flächenverformung (Flächenschrumpf) praktisch nicht auftritt. Im innenliegenden Bereich des Kaliberumfanges (z.B. 0-60° und 300-360°) liegen die Werte für die Flächenverformung bei mindestens + 5°. Im außenliegenden Bereich (z.B. 110-250° in Figur 5) werden z.B. Werte von +20%, +25% und +30% erreicht. Wie ein Vergleich mit Figur 6 zeigt, wird bei gekranzten Hüllen, die nach herkömmlichem Verfahren gekranzt wurden, praktisch für jeden auf dem Kaliberumfang liegenden Abschnitt negative Werte erzielt, d.h. der Darm schrumpft an praktisch jeder Stelle beim Kränzen. Höchstens im außenliegenden Bereich um 180° tendiert die Flächenverformung gegen 0%.

Erfindungsgemäß ist das Verfahren, wenn die Schlauchhülle, die das Kranzwerkzeug verlässt "insgesamt gestreckt" wird. Darunter ist zu verstehen, dass die Flächenverformung insgesamt, also über die Summe aller auf dem Kaliberumfang liegenden Abschnitte, positiv ist. Das heißt, dass das Verfahren dann erfindungsgemäß ist bzw. die Kranzvorrichtung erfindungsgemäß betrieben wird, wenn die Schlauchhülle, die das Kranzwerkzeug verlässt, ein (wie beispielsweise in den Figuren 5 und 6 gezeigt) mit einem positiven Flächenintegral aufweist ("positive Gesamtflächenverformung"). Dabei wird die Fläche zwischen x-Achse und Kurve im positive y-Achsenbereich positiv gewertet und die Fläche zwischen x-Achse und Kurve im negativen y-Achsenbereich negativ. Zur Bestimmung der Gesamtflächenverformung muss ein Querverformungsprofil und ein Längsverformungsprofil mit jeweils mindestens 24 in jeweils gleichem Abstand über den Kaliberumfang verteilten Messwerten erstellt werden (wie beispielsweise in den Figuren 5 und 6 gezeigt). Dazu werden vor dem Kranzprozess auf die Schlauchhülle quadratische Karos mit 5 mm Kantenlänge im Flexodruck oder im Tiefdruck gedruckt. Nach dem Kranzprozess werden die vormals quadratischen Karos in ihren Dimensionen und bezogen auf der Position am Umfang mit einem Lineal vermessen. Aus den gemessenen Quer- und Längskantenlängen werden dann Querverformungsprofil und Längsverformungsprofil erstellt. Aus diesen wird dann ein Flächenverformungsprofil gebildet (wie z.B. in den Figuren 5 und 6 gezeigt).

Mit dem erfindungsgemäßen Verfahren können Schlauchhüllen erhalten werden, die unter anderem folgende Vorteile aufweisen:

Bei den Schlauchhüllen wird über den ganzen Kaliberumfang eine gleichmäßige Durchlässigkeit für z.B. Rauch und damit auch eine gleichmäßige Verfärbung der Wurstoberfläche nach Räucherung erreicht. Somit wird auch über den ganzen Umfang die gleiche Geschmackintensität für den Rauch beim Verkosten der geräucherten Wurst erzielt. Die gleichen Vorteile gelten auch für die Sperreigenschaften für z.B. einen rauchundurchlässigen Darm.

Da die Schlauchhülle nur gedehnt wird, wird die Schichtdicke insgesamt dünner und somit wird das Verhältnis von gekranzter Länge zu der eingegangenen Länge besser. Die nutzbare Länge beim Füllen des Darmes ist nach dem Kranzprozess größer als die nutzbare Länge vor dem Kranzprozess.

Bei rauchdurchlässigen Darmsorten ist es z.B. wichtig, dass bei geforderter mechanischer Festigkeit die Schichtdicke möglichst gering ist. Insbesondere bezüglich größerer Durchlässigkeiten bietet dieses Verfahren Vorteile, weil der Darm bei diesem Verfahren eine insgesamt dünnere Schichtdicke erhält und damit mehr Rauch durchlässt als bei oben angegebenen Vergleichskranzverfahren.

Besondere Aufmerksamkeit legt der Verbraucher auf das wendelförmige Schälen des Darmes im verzehrfähigen Zustand der gefüllten Wurst. Unter dem wendelförmigen Schälen ist die Eigenschaft zu verstehen, die es erlaubt, den Darm von der Wurst in wendelförmigen Streifen abzuziehen. Diese Eigenschaft ist zum Portionieren wichtig. Durch die gleichmäßige Dicke über dem Umfang kann der Darm mit dem erfindungsgemäßen Verfahren mühelos wendelförmig entfernt (geschält) werden.

Weiterhin können Schlauchhüllen mit dünnerer Schichtdicke mit einer größeren Länge auf eine Raupenlänge gerafft werden. Größere Lauflängen verbessern bei gleicher Raffraupenlänge die Wirtschaftlichkeit beim Raffen und auch in nachfolgenden Schritt wie Füllen, weil der Anteil an Stillstandszeiten für Wechseln der Raffraupe verkürzt wird. Gegebenenfalls kann für eine Schlauchhülle mit dünnerer Schichtdicke auch eine kleinere und damit günstigere Clippsorte verwendet werden.

Mit dem erfindungsgemäßen Verfahren wird eine gekranzte Schlauchhülle aus thermoplastischem Material hergestellt, wobei die Hülle eine auf den Kaliberumfang bezogene gleichmäßige Hüllendicke, aufweist, und wobei gleichmäßige Hüllendicke bedeutet, dass bei mindestens 30 in jeweils gleichem Abstand über den Kaliberumfang verteilten Messungen der Hüllendicke der Durchschnitt der 5 höchsten Werte der Dicke höchsten 1,28-fach, bevorzugt höchsten 1,25-fach, besonders bevorzugt höchsten 1,22-fach, über dem Durchschnitt der 5 niedrigsten Werte der Dicke liegt.

Diese Hüllen weisen in der Regel eine Dicke auf, die zwischen 10 und 100 $\mu$m, bevorzugt zwischen 15 und 80 $\mu$m, liegt. Durch das erfindungsgemäße Verfahren kann erreicht werden, dass die Standardabweichung $\sigma_x$ vom Mittelwert der Hüllendicke höchstens 4 $\mu$m, bevorzugt höchstens 3,5 $\mu$m, weiter bevorzugt höchstens 3,3 $\mu$m, besonders bevorzugt höchstens 3 $\mu$m, beträgt.

Die Standardabweichung $\sigma_x$ der Grundgesamtheit kann mit Hilfe der Formel (1) geschätzt werden. Dabei ist $s_x^*$ der Schätzer für die Standardabweichung $\sigma_x$ der Grundgesamtheit, N der Stichprobenumfang, $x_i$ der Messwert am i-ten Element der Stichprobe, und es gilt Formel (2) für das arithmetische Mittel der Stichprobe. Im Rahmen der Erfindung kann ab einem Stichprobenumfang von N= 30 in jeweils gleichem Abstand über den Kaliberumfang verteilten Messwerten die Standardabweichung $\sigma_x$ durch den Schätzer $s_x^*$ ersetzt werden.

$$s_x^* := \sqrt{\frac{1}{N-1}\sum_{i=1}^{n}(x_i - \bar{x})^2} \quad (1)$$

$$\bar{x} = \frac{1}{N}\sum_{i=1}^{N}x_i \qquad (2)$$

Diese gekranzten Schlauchhüllen weisen typischerweise ein Kaliber von 20 bis 80 mm, bevorzugt 25 bis 70 mm, besonders bevorzugt 30 bis 60 mm, auf. Der äußere Kranzdurchmesser derartiger Schlauchhüllen beträgt üblicherweise 60 bis 400 mm, bevorzugt 70 bis 350 mm, weiter bevorzugt 75 bis 300 mm, und besonders bevorzugt 80 bis 260 mm.

Im Rahmen der Erfindung können die gekranzten Schlauchhülle ein- oder mehrschichtig sein, wobei das thermoplastische Material gegebenenfalls für jede der Schichten unabhängig voneinander ausgewählt sein kann. Das thermoplastische Material kann für jede der Schichten unabhängig voneinander ein Polyamid- (PA), Ethylenvinylalkohol- (EVOH), Polyester- und/oder Polyolefin-basierter (PO) Kunststoff sein. Bevorzugt ist ein 3- bis 7-schichtiger Aufbau mit Schichten auf Basis von Polyamid und Polyolefin, wobei besonders bevorzugt die äußeren Schichten Polyamid oder auf Basis von Polyamid sind. Besonders bevorzugt sind 3- bis 5-schichtige Darmaufbauten des Typs PA/PA/PA, PA/PO/PA und PA/xy/xy/xy/PA, mit xy= Polyamid- oder Polyolefin-basiertem Kunststoff.

Des Weiteren können die gekranzten Schlauchhülle uni- oder biaxial verstreckt sein, wobei biaxial verstreckte Hüllen bevorzugt sind. Unabhängig davon kann das Hüllenmaterial auch schrumpffähig oder nicht schrumpffähig sein, wobei schrumpffähige Hüllen bevorzugt sind.

Die erfindungsgemäßen gekranzten Schlauchhüllen können zum Beispiel als Nahrungsmittelhüllen, und bevorzugt als Wursthüllen verwendet werden.

Beansprucht wird auch die Verwendung einer Kranzvorrichtung nach einem der Ansprüche 1 bis 3, umfassend ein Kranzwerkzeug, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird zum Herstellen einer gekranzten Schlauchhülle mit gleichmäßiger Schichtdicke über ihren ganzen Kaliberumfang.

Insbesondere wird die Verwendung einer solchen Kranzvorrichtung beansprucht, wenn die Kranzvorrichtung derart verwendet wird, dass mittels Kraftübertragung durch die Führungsrollen zusätzlich ein solcher Zug auf die Schlauchhülle ausgeübt wird, dass diese insgesamt gestreckt wird.

Figur 1 zeigt schematisch ein Kranzwerkzeug einer Kranzvorrichtung, wobei der aufgeblasene Darm (1) in der Vorheizung (2) über seinen Umfang mit Wärme beaufschlagt wird. Innerhalb des Kranzwerkzeugs (3) wird der Darm durch innere (4) und durch äußere (5) Rollen, die beide in konvexer Ausführung ausgestattet sind, geführt. Durch die inneren Schlitzdüsen (6) wird Wärme vom Innenrohr und über äußeren Schlitzdüsen (7) vom Außenrohr an die Schlauchhülle geführt.

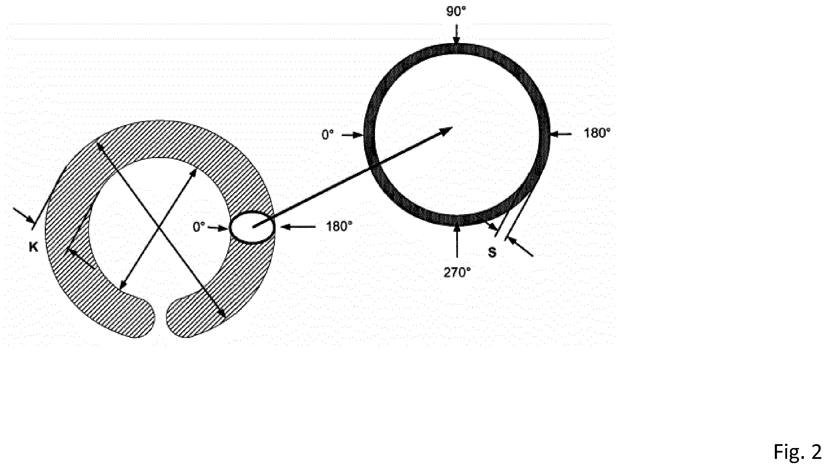

Figur 2 zeigt auf der linken Seite schematisch eine Draufsicht auf eine gefüllte Kranzhülle. Der Buchstabe (K) bezeichnet das Füllkaliber, der Buchstaben (D) den Innendurchmesser und der Buchstaben (S) die Hüllendicke der Schlauchhülle. Die "Innenseite" eines Kranzabschnitts ist der Innendurchmesserseite zugewendet und bekommt die Gradzahl 0° zugeordnet und die "Außenseite" ist der Außendurchmesserseite zugewendet und bekommt die Gradzahl 180° zugeordnet. Weiterhin zeigt Figur 2 einen Querschnitt der Schlauchhülle mit entsprechend gekennzeichneten Winkellagen 0°, 90°, 180° und 270°.

Figur 3 zeigt die Verteilung der Schichtdicke über den Kaliberumfang eines Abschnittes einer erfindungsgemäß gekranzten Hülle in Abhängigkeit von der Position auf dem Umfang.

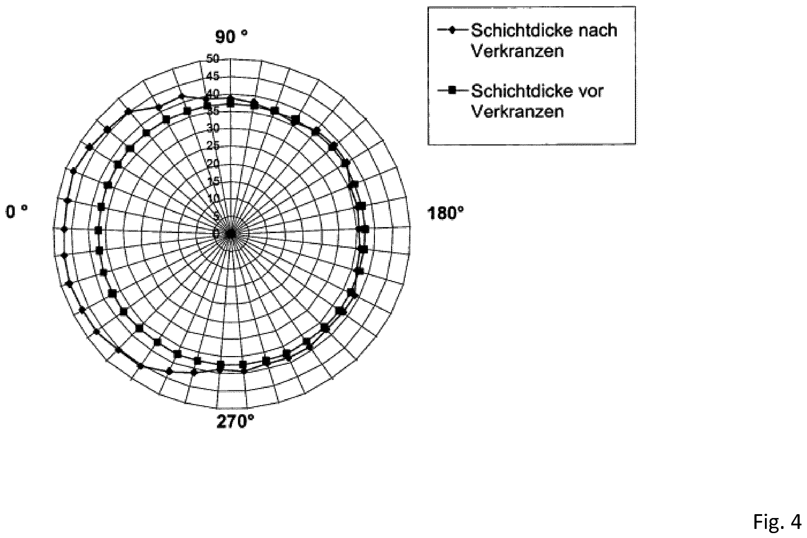

Figur 4 zeigt die Verteilung der Schichtdicke über den Kaliberumfang eines Abschnittes einer nicht erfindungsgemäß gekranzten Hülle in Abhängigkeit von der Position auf dem Umfang.

Figur 5 zeigt die Längs- und Querverformungen sowie die Flächenverformung über den Kaliberumfang verteilt bei einer erfindungsgemäßen Kranzhülle.

Figur 6 zeigt die Längs- und Querverformungen sowie die Flächenverformung über den Kaliberumfang verteilt bei einer nicht erfindungsgemäßen Kranzhülle.

Beispiele

Gemäß Tabelle 1 wurden in den Beispielen 1 und 2 Schlauchhüllen nach erfindungsgemäßer Methode und in den Vergleichsbeispielen V1 und V2 Schlauchhüllen nach herkömmlicher Methode verkranzt. Die Ergebnisse sind in Tabelle 1 gezeigt.

Bei den Schlauchhüllen handelt es sich um Walsroder® K smok 40 und Walsroder® K norm 43 der Firma CaseTech GmbH mit dreischichtigem PA-Aufbau bzw. mit fünfschichtigem Aufbau umfassend außenliegende PA-basierte Schichten und einer innenliegenden Polyolefin-basierten Haftvermittlerschicht.

Die in der Tabelle angegebenen 4 Darmsorten wurden alle auf einer wie oben beschriebenen an sich üblichen und im Handel erhältlichen Kranzdarmanlage mit folgenden Bedingungen verkranzt: Das Kranzwerkzeug weist nahezu zwei vollständige Wendeln (2x 360°) auf, in denen der Schlauch erwärmt und durch Rollen geführt wird. Die Einlaufgeschwindigkeit betrug in allen Fällen 30 m/min, wobei die Rollengeschwindigkeit auf der Innenseite auf 31 m/min und auf der Außenseite auf 33 m/min eingestellt wurde. Im erfindungsgemäßen Fall betrug die Auslaufgeschwindigkeit 31 m/min, da der Darm insgesamt leicht gestreckt wurde. Im nicht-erfindungsgemäßen Fall war die Auslaufgeschwindigkeit 25 m/min, was auf das Schrumpfen des Schlauches im Kranzwerkzeug hinweist.

Temperaturen:

Vorheizung 180 °C; Innenseite 220 °C und Außenseite 210 °C. Für die erfindungsgemäßen Muster 1 und 2 wurden die Oberflächen der Rollen innerhalb des Kranzwerkzeuges zu den Vergleichsmustern verändert. Die Oberfläche unterscheidet sich in der Traktionsfähigkeit der Beschichtung. Bei den Vergleichsmustern bestand die Oberfläche aus Teflon und bei den erfindungsgemäßen Mustern bestand die Oberfläche dieser Rollen aus einer Beschichtung, wie sie z.B. von der Firma Impreglon unter der Bezeichnung PlasmaCoat 60301/1008 F vertrieben wird. Die PlasmaCoat-Beschichtung ermöglicht es durch ihre Reibeigenschaft, einen Zug auf die Hülle auszuüben. Die teflonbeschichteten Rollen im nicht-erfindungsgemäßen Fall hingegen drehen schneller als die Auslaufgeschwindigkeit ist, weisen also einen erheblichen Schlupf auf.

Die Hüllendicke der gekranzten Schlauchhülle über den Kaliberumfang wird nach dem Kränzen durch eine mechanische Abtastung nach DIN 53370 vermessen. Die auf der Schlauchhülle liegende Messplatte hat einen relativ kleinen Durchmesser von 3 mm, um nur die Dicke der Schlauchhülle und nicht die Verformung mit zu erfassen. Bei der Messung wird der Tastkopf über die aufgeschnittene Schlauchfolie in regelmäßigen Abständen geführt, so dass 30 oder mehr Messpunkte am Umfang erreicht werden.

Die Genauigkeit der Messung beträgt ca. plus minus 0,5 $\mu$m.

Zur Bestimmung der Gesamtflächenverformung wird ein Querverformungsprofil und ein Längsverformungsprofil mit jeweils mindestens 24 in jeweils gleichem Abstand über den Kaliberumfang verteilten Messwerten erstellt (wie beispielsweise in den Figuren 5 und 6 gezeigt). Dazu werden vor dem Kranzprozess auf die Schlauchhülle quadratische Karos mit 5 mm Kantenlänge im Flexodruck oder im Tiefdruck gedruckt. Nach dem Kranzprozess werden die vormals quadratischen Karos in ihren Dimensionen und bezogen auf der Position am Umfang mit einem Lineal vermessen. Aus den gemessenen Quer- und Längskantenlängen werden dann Querverformungsprofil und Längsverformungsprofil erstellt. Aus diesen Profilen wird dann ein Flächenverformungsprofil gebildet (wie z.B. in den Figuren 5 und 6 gezeigt) und das Flächenintegral bestimmt. Dabei wird die Fläche zwischen x-Achse und Kurve im positive y-Achsenbereich positiv gewertet und die Fläche zwischen x-Achse und Kurve im negativen y-Achsenbereich negativ.

Für die Bestimmung des Rauchübergangs werden die Kunststoffschlauchhüllen vor dem Füllen mit z.B. Teewurst zunächst gewässert, mit der Wurstmasse gefüllt, umgerötet und dann in einer Räucherkammer geräuchert. Die Räucherbedingungen sind: 23 °C bei 85% r.F.. Es wird innerhalb von 6 Stunden 6 × 25 min Rauch eingeblasen, dazwischen finden Pausen bei bleibenden 23 °C statt.

Nach dem Rauchvorgang wird die Schlauchhülle entfernt und durch visuelles Betrachten wird der Grad der Verfärbung über den Umfang und im Vergleich zu nicht nach dem erfindungsgemäßen Verfahren hergestellten und geräucherten Kranzhüllen bestimmt. Insbesondere beim Vergleich der Innenseite (Gradzahl 0°) zur Außenseite (Gradzahl 180°) kann eine praxisgerechte Aussage bezüglich der Durchlässigkeit über dem Umfange erfolgen. Wenn bei der Beurteilung zwischen der Innenseite und der Aussehen in geschmacklicher und optischer Hinsicht keinen Unterschied erkannt wird, wird die Note 1 und bei sehr großen Unterschieden zwischen den Seiten die Note 5 vergeben.

Durch die gleichmäßige Hüllendicke über den Kaliberumfang kann der erfindungsgemäß hergestellte Darm mühelos wendelförmig von der Wurst entfernt (geschält) werden. Die Beurteilung erfolgt in Schulnoten. Die Note 1 wird für ein sehr gleichmäßiges Schälergebnis und die Note 5 für mangelhaftes Schälergebnis vergeben.

Tabelle 1: Ergebnisse Vergleichsbeispiele V1 und V2 und Beispiele 1 und 2

| Beispiel | | 1 | 2 | V1 | V2 |
|---|---|---|---|---|---|
| Bezeichnung gekranzter Darm | | K smok 40 Kranz | K norm 43 Kranz | K smok 40 Kranz | K norm 43 Kranz |
| | | gemäß Erfindung | gemäß Erfindung | nicht gemäß Erfindung | nicht gemäß Erfindung |
| Hüllendicke im ungekranzten Zustand | $\mu$m | 27 | 42 | 27 | 42 |
| Mittelwert der 5 größten Hüllendicken | $\mu$m | 24,0 | 37,5 | 36,9 | 60,1 |
| Mittelwert der 5 kleinsten Hüllendicken | $\mu$m | 19,5 | 29,4 | 25,9 | 42,5 |

(fortgesetzt)

| | | gemäß Erfindung | gemäß Erfindung | nicht gemäß Erfindung | nicht gemäß Erfindung |
|---|---|---|---|---|---|
| Verhältnis der 5 größten zu den 5 kleinsten Hüllendickenwerten | | 1,23 | 1,28 | 1,42 | 1,42 |
| Delta Max-Min der Hüllendicke | $\mu$m | 4,5 | 8,1 | 10,6 | 17,6 |
| Mittelwert der Hüllendicke nach Kränzen (36 Messwerte) | $\mu$m | 21,60 | 36,44 | 30,88 | 49,91 |
| Schätzer sx* der Standardabweichung der Hüllendicke | $\mu$m | 1,73 | 3,26 | 4,23 | 6,64 |
| Gesamtflächenverhältnis größer 10 % an allen Stellen des Umfangs | | ja | ja | nein | nein |
| Beurteilung nach Noten Gleichmäßigkeit des Rauchübergangs | | 1 | 2 | 5 | 5 |
| Beurteilung nach Noten wendelförmiges Schälen | | 1 | 2 | 5 | 5 |

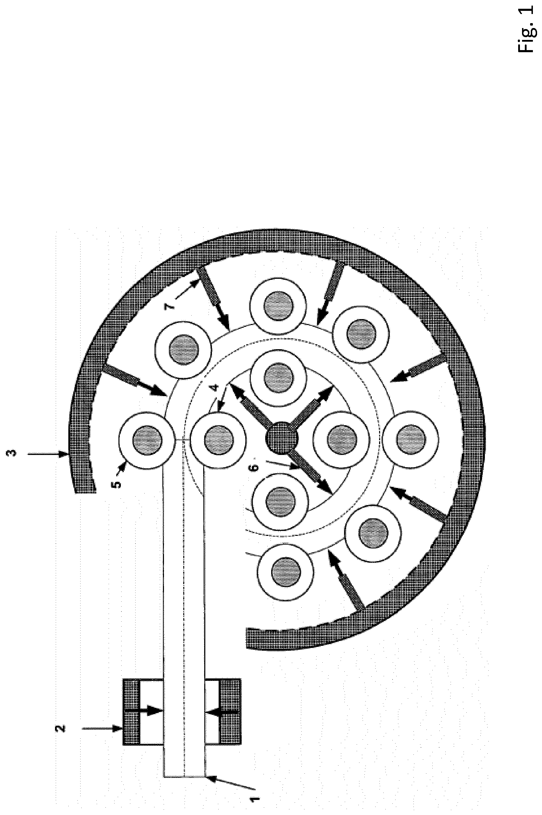

Bezugszeichenliste Figur 1

(1)    Schlauchhülle
(2)    Vorheizung
(3)    Kranzwerkzeug
(4)    innere Führungsrollen
(5)    äußere Führungsrollen
(6)    innere Schlitzdüsen
(7)    äußere Schlitzdüsen

**Patentansprüche**

1.    Vorrichtung zum kontinuierlichen Kränzen einer geraden thermoplastischen Schlauchhülle (1), wobei zum Zwecke des Kranzens eine zunächst ungekranzte Schlauchhülle (1) aus thermoplastischem Material in abschnittsweise aufgeblasenem Zustand der Vorrichtung zugeführt und mittels angetriebener Führungsrollen (4, 5) durch die Vorrichtung unter Erwärmen und unter Bildung eines wendelförmigen Schlauches hindurchgeführt wird, wobei zum Erwärmen der Schlauchhülle (1) vor dem Einlaufen in das Kranzwerkzeug (3) eine Vorheizung (2) vorgesehen ist, **dadurch gekennzeichnet, dass** das Kranzwerkzeug (3) zwischen den inneren Führungsrollen (4) positionierte innere Schlitzdüsen (6), und zwischen den äußeren Führungsrollen (5) positionierte äußere Schlitzdüsen (7) umfasst, wobei die inneren Schlitzdüsen (6) Wärme vom Innenrohr und die äußeren Schlitzdüsen (7) Wärme vom Außenrohr an die Schlauchhülle (1) zuführen, wobei die Austrittsöffnungen der inneren Schlitzdüsen (6) in radialer Richtung des Kranzwerkzeuges (3) nach außen gerichtet und die Austrittsöffnungen der äußeren Schlitzdüsen (7) in radialer Richtung des Kranzwerkzeuges (3) nach innen gerichtet sind, wobei die inneren und äußeren Führungsrollen (4, 5) eine reibfähige Oberfläche aufweisen oder insgesamt aus einem reibfähigen Material aufgebaut sind,, so dass mittels Kraftübertragung durch die Führungsrollen (4, 5) zusätzlich ein solcher Zug auf die Schlauchhülle (1) ausgeübt wird, dass diese insgesamt gestreckt wird.

2.    Vorrichtung nach Anspruch 1, **dadurch gekennzeichnet, dass** die inneren Führungsrollen (4) und die äußeren Führungsrollen (5) mit einer PlasmaCoat-Beschichtung versehen sind.

3.    Vorrichtung nach Anspruch 1 oder 2, **dadurch gekennzeichnet, dass** das Kranzwerkzeug (3) inklusive der Führungsrollen (4, 5) eine Wendel umfasst, wobei die die Führungsrollen (4, 5) umfassende Wendel eine Länge von 400° bis 700° umfasst.

4.  Verfahren zum kontinuierlichen Kränzen einer geraden thermoplastischen Schlauchhülle (1), mit den Verfahrensschritten:

    - wobei zum Zwecke des Kranzens eine zunächst ungekranzte Schlauchhülle (1) aus thermoplastischem Material in abschnittsweise aufgeblasenem Zustand einem Kranzwerkzeug (3) zugeführt und mittels angetriebener Führungsrollen (4, 5) durch das Kranzwerkzeug (3) unter Erwärmen und unter Bildung eines wendelförmigen Schlauches hindurchgeführt wird
    - wobei der aufgeblasene Darm (1) in einer Vorheizung (2) über seinen Umfang mit Wärme beaufschlagt wird;
    - Zuführen der vorerwärmten, aufgeblasenen Schlauchhülle (1) zu einer Kranzvorrichtung (3);
    - wobei die Schlauchhülle (1) mittels angetriebener innerer und äußerer Führungsrollen (4, 5) durch die Kranzvorrichtung (3) unter Bildung des wendelförmigen Schlauches geführt wird;
    - wobei die Schlauchhülle (1) mittels zwischen den inneren Führungsrollen (4) positionierten inneren Schlitzdüsen (6) und zwischen den äußeren Führungsrollen (5) positionierten äußeren Schlitzdüsen (7) über den Umfang der Schlauchhülle (1) erwärmt wird;
    - wobei die inneren Schlitzdüsen (6) Wärme vom Innenrohr und die äußeren Schlitzdüsen (7) Wärme vom Außenrohr an die Schlauchhülle (1) zuführen, wobei die Austrittsöffnungen der inneren Schlitzdüsen (6) in radialer Richtung des Kranzwerkzeuges (3) nach außen gerichtet und die Austrittsöffnungen der äußeren Schlitzdüsen (7) in radialer Richtung des Kranzwerkzeuges (3) nach innen gerichtet sind;
    - wobei die inneren und äußeren Führungsrollen (4, 5) eine reibfähige Oberfläche aufweisen oder insgesamt aus einem reibfähigen Material aufgebaut sind, so dass mittels Kraftübertragung durch die Führungsrollen (4, 5) zusätzlich ein solcher Zug auf die Schlauchhülle (1) ausgeübt wird, dass diese insgesamt gestreckt wird .

5.  Verwendung einer Kranzvorrichtung nach einem der Ansprüche 1 bis 3, umfassend ein Kranzwerkzeug (3), wobei zum Zwecke des Kranzens eine zunächst ungekranzte Schlauchhülle (1) aus thermoplastischem Material in abschnittsweise aufgeblasenem Zustand der Kranzvorrichtung zugeführt und mittels angetriebener Führungsrollen (4, 5) durch die Kranzvorrichtung unter Erwärmen und unter Bildung eines wendelförmigen Schlauches hindurchgeführt wird zum Herstellen einer gekranzten Schlauchhülle (1) mit gleichmäßiger Schichtdicke über ihren ganzen Kaliberumfang.

6.  Verwendung nach Anspruch 5, **dadurch gekennzeichnet, dass** die Kranzvorrichtung derart verwendet wird, dass mittels Kraftübertragung durch die Führungsrollen (4, 5) zusätzlich ein solcher Zug auf die Schlauchhülle (1) ausgeübt wird, dass diese insgesamt gestreckt wird.

7.  Verwendung nach einem der Ansprüche 5 oder 6, **dadurch gekennzeichnet, dass** die Schlauchhülle (1) das Kranzwerkzeug (3) mit einer Längsverformung in jedem auf dem Kaliberumfang liegenden Abschnitt und bezogen auf die unverkranzt eingesetzte Hülle von größer -30%, bevorzugt größer -20%, besonders bevorzugt größer -10%, verlässt.

8.  Verwendung nach einem der Ansprüche 5 bis 7, **dadurch gekennzeichnet, dass** die Schlauchhülle (1) das Kranzwerkzeug (3) mit einer Flächenverformung in jedem auf dem Kaliberumfang liegenden Abschnitt und bezogen auf die unverkranzt eingesetzte Hülle von größer -10%, bevorzugt größer 0%, besonders bevorzugt größer 5%, verlässt.

9.  Verwendung nach einem der Ansprüche 5 bis 8, **dadurch gekennzeichnet, dass** die Wärmebehandlung durch an die Innenseite der Schlauchwendel herangeführte Heißluft erfolgt und die Heißluft gleichmäßig über den Umfang der Schlauchhülle (1) verteilt wird.

10. Verwendung nach einem der Ansprüche 5 bis 9, **dadurch gekennzeichnet, dass** die Schlauchhülle (1) vor dem Einlaufen in das Kranzwerkzeug (3) und/oder auch von außen innerhalb des Kranzwerkzeuges (3) erwärmt wird.


**Claims**

1.  Apparatus for the continuous ring shaping of a straight thermoplastic tubular casing (1), an initially non-ring-shaped tubular casing (1) made from thermoplastic material being fed in a locally inflated state to the apparatus for the purpose of ring shaping, and being guided through the apparatus by means of driven guide rollers (4, 5) with heating and with the formation of a spiral casing, a preheating means (2) being provided for heating the tubular casing (1) before entry into the ring shaping mould (3), **characterized in that** the ring shaping mould (3) comprises inner slot nozzles (6) which are positioned between the inner guide rollers (4), and outer slot nozzles (7) which are positioned between the outer guide rollers (5), the inner slot nozzles (6) feeding heat from the inner pipe and the outer slot nozzles (7) feeding heat from the outer pipe to the tubular casing (1), the outlet openings of the inner slot nozzles (6) being directed outwards in the radial direction of the ring shaping mould (3), and the outlet openings of the outer slot nozzles (7) being directed inwards in the radial direction of the ring shaping mould (3), the inner and outer guide rollers (4, 5) having a friction-generating surface or being constructed overall from a friction-generating material, with the result that additionally a tensile force is exerted on the tubular casing (1) by means of the transmission of force by way of the guide rollers (4, 5), which tensile force is such that this tubular casing (1) overall is stretched.

2. Apparatus according to Claim 1, **characterized in that** the inner guide rollers (4) and the outer guide rollers (5) are provided with a PlasmaCoat coating.

3. Apparatus according to Claim 1 or 2, **characterized in that** the ring shaping mould (3) including the guide rollers (4, 5) comprises a spiral, the spiral which comprises the guide rollers (4, 5) comprising a length of from 400° to 700°.

4. Method for the continuous ring shaping of a straight thermoplastic tubular casing (1), with the method steps:

   - an initially non-ring-shaped tubular casing (1) made from thermoplastic material being fed in a locally inflated state to a ring shaping mould (3) for the purpose of ring shaping, and being guided through the ring shaping mould (3) by means of driven guide rollers (4, 5) with heating and with the formation of a spiral casing,
   - the inflated skin (1) being loaded over its circumference with heat in a preheating means (2);

     - feeding of the preheated, inflated tubular casing (1) to a ring shaping apparatus (3);

   - the tubular casing (1) being guided through the ring shaping apparatus (3) by means of driven inner and outer guide rollers (4, 5) with the formation of the spiral casing;
   - the tubular casing (1) being heated over the circumference of the tubular casing (1) by means of inner slot nozzles (6) which are positioned between the inner guide rollers (4) and by means of outer slot nozzles (7) which are positioned between the outer guide rollers (5);
   - the inner slot nozzles (6) feeding heat from the inner pipe and the outer slot nozzles (7) feeding heat from the outer pipe to the tubular casing (1), the outlet openings of the inner slot nozzles (6) being directed outwards in the radial direction of the ring shaping mould (3), and the outlet openings of the outer slot nozzles (7) being directed inwards in the radial direction of the ring shaping mould (3);
   - the inner and outer guide rollers (4, 5) having a friction-generating surface or being constructed overall from a friction-generating material, with the result that additionally a tensile force is exerted on the tubular casing (1) by means of the transmission of force by way of the guide rollers (4, 5), which tensile force is such that this tubular casing (1) overall is stretched.

5. Use of a ring shaping apparatus according to one of Claims 1 to 3, comprising a ring shaping mould (3), an initially non-ring-shaped tubular casing (1) made from thermoplastic material being fed in a locally inflated state to the ring shaping apparatus for the purpose of ring shaping, and being guided through the ring shaping apparatus by means of driven guide rollers (4, 5) with heating and with the formation of a spiral casing, in order to establish a ring-shaped tubular casing (1) with a homogeneous layer thickness over its entire calibre circumference.

6. Use according to Claim 5, **characterized in that** the ring shaping apparatus is used in such a way that additionally a tensile force is exerted on the tubular casing (1) by means of the transmission of force by way of the guide rollers (4, 5), which tensile force is such that this tubular casing (1) overall is stretched.

7. Use according to either of Claims 5 or 6, **characterized in that** the tubular casing (1) leaves the ring shaping mould (3) with a longitudinal deformation, in every section which lies on the calibre circumference, of greater than -30%, preferably greater than -20%, particularly preferably greater than -10% in relation to the casing which is inserted in non-ring-shaped form.

8. Use according to one of Claims 5 to 7, **characterized in that** the tubular casing (1) leaves the ring shaping mould (3) with a surface deformation, in every section which lies on the calibre circumference, of greater than -10%, preferably greater than 0%, particularly preferably greater than 5% in relation to the casing which is inserted in non-ring-shaped form.

**9.** Use according to one of Claims 5 to 8, **characterized in that** the heat treatment takes place by way of hot air which is guided onto the inner side of the casing coil, and the hot air is distributed uniformly over the circumference of the tubular casing (1).

**10.** Use according to one of Claims 5 to 9, **characterized in that** the tubular casing (1) is heated before entry into the ring shaping mould (3) and/or also from the outside within the ring shaping mould (3).

**Revendications**

**1.** Dispositif de cintrage continu d'une gaine tubulaire thermoplastique droite (1), dans lequel, en vue du cintrage, une gaine tubulaire (1) en matériau thermoplastique, d'abord non cintrée, est amenée dans un état gonflé par sections au dispositif, et est guidée au moyen de rouleaux de guidage (4, 5) entraînés à travers le dispositif tout en chauffant et en formant un tuyau en hélice, dans lequel un dispositif de préchauffage (2) est prévu pour chauffer la gaine tubulaire (1) avant son entrée dans l'outil de cintrage (3), caractérisé en ce que l'outil de cintrage (3) comprend des filières plates intérieures (6) positionnées entre les rouleaux de guidage intérieurs (4), et des filières plates extérieures (7) positionnées entre les rouleaux de guidage extérieurs (5), les filières plates intérieures (6) amenant de la chaleur du tube intérieur, et les filières plates extérieures (7) amenant de la chaleur du tube extérieur à la gaine tubulaire (1), dans lequel les orifices de sortie des filières plates intérieures (6) sont dirigés vers l'extérieur dans la direction radiale de l'outil de cintrage (3), et les orifices de sortie des filières plates extérieures (7) sont dirigés vers l'intérieur dans la direction radiale de l'outil de cintrage (3), dans lequel les rouleaux de guidage intérieurs et extérieurs (4, 5) présentent une surface abrasive ou sont dans leur ensemble configurés à partir d'un matériau abrasif de sorte qu'au moyen d'une transmission de force par le biais des rouleaux de guidage (4, 5), en plus une telle traction est exercée sur la gaine tubulaire (1) que cette dernière est étirée dans son ensemble.

**2.** Dispositif selon la revendication 1, **caractérisé en ce que** les rouleaux de guidage intérieurs (4) et les rouleaux de guidage extérieurs (5) sont munis d'un revêtement au plasma.

**3.** Dispositif selon la revendication 1 ou 2, **caractérisé en ce que** l'outil de cintrage (3), y compris les rouleaux de guidage (4, 5), comprend une hélice, dans lequel l'hélice comprenant les rouleaux de guidage (4, 5) présente une longueur de 400° à 700°.

**4.** Procédé de cintrage continu d'une gaine tubulaire thermoplastique droite (1), comprenant les étapes de procédé :

- dans lequel, en vue du cintrage, une gaine tubulaire (1) en matériau thermoplastique, d'abord non cintrée, est amenée dans un état gonflé par sections à un outil de cintrage (3), et est guidée au moyen de rouleaux de guidage (4, 5) entraînés à travers l'outil de cintrage (3) tout en chauffant et en formant un tuyau en hélice,
- dans lequel le boyau gonflé (1) est soumis sur sa circonférence à la chaleur dans un dispositif de préchauffage (2) ;
- amener la gaine tubulaire (1) gonflée et préchauffée à un dispositif de cintrage (3) ;
- dans lequel la gaine tubulaire (1) est guidée au moyen de rouleaux de guidage intérieurs et extérieurs (4, 5) entraînés à travers le dispositif de cintrage (3) tout en formant le tuyau en hélice ;
- dans lequel la gaine tubulaire (1) est chauffée au moyen de filières plates intérieures (6) positionnées entre les rouleaux de guidage intérieurs (4) et de filières plates extérieures (7) positionnées entre les rouleaux de guidage extérieurs (5) sur la circonférence de la gaine tubulaire (1) ;
- dans lequel les filières plates intérieures (6) amènent de la chaleur du tube intérieur et les filières plates extérieures (7) amènent de la chaleur du tube extérieur à la gaine tubulaire (1), dans lequel les orifices de sortie des filières plates intérieures (6) sont dirigés vers l'extérieur dans la direction radiale de l'outil de cintrage (3), et les orifices de sortie des filières plates extérieures (7) sont dirigés vers l'intérieur dans la direction radiale de l'outil de cintrage (3) ;
- dans lequel les rouleaux de guidage intérieurs et extérieurs (4, 5) présentent une surface abrasive ou sont dans leur ensemble configurés à partir d'un matériau abrasif de sorte qu'au moyen d'une transmission de force par le biais des rouleaux de guidage (4, 5), de plus une telle traction est exercée sur la gaine tubulaire (1) que celle-ci est étirée dans son ensemble.

**5.** Utilisation d'un dispositif de cintrage selon l'une quelconque des revendications 1 à 3, comprenant un outil de cintrage (3), dans laquelle, en vue du cintrage, une gaine tubulaire (1) en matériau thermoplastique, d'abord non cintrée, est amenée dans un état gonflé par sections au dispositif de cintrage, et est guidée au moyen de rouleaux de guidage (4, 5) entraînés à travers le dispositif de cintrage tout en chauffant et en formant un tuyau en hélice afin de fabriquer une gaine tubulaire (1) cintrée ayant une épaisseur de couche régulière sur toute sa circonférence de calibre.

6. Utilisation selon la revendication 5, **caractérisée en ce que** le dispositif de cintrage est utilisé de telle sorte qu'au moyen d'une transmission de force par le biais des rouleaux de guidage (4, 5), en plus une telle traction est exercée sur la gaine tubulaire (1) que celle-ci est étirée dans son ensemble.

7. Utilisation selon l'une quelconque des revendications 5 ou 6, **caractérisée en ce que** la gaine tubulaire (1) quitte l'outil de cintrage (3) avec une déformation longitudinale dans chaque section située sur la circonférence de calibre et par rapport à la gaine mise en place sans cintrage de plus de -30 %, de préférence de plus de -20 %, de manière particulièrement préférée de plus de -10 %.

8. Utilisation selon l'une quelconque des revendications 5 à 7, **caractérisée en ce que** la gaine tubulaire (1) quitte l'outil de cintrage (3) avec une déformation de surface dans chaque section située sur la circonférence de calibre et par rapport à la gaine mise en place sans cintrage de plus de -10 %, de préférence de plus de 0 %, de manière particulièrement préférée de plus de 5 %.

9. Utilisation selon l'une quelconque des revendications 5 à 8, **caractérisée en ce que** le traitement thermique est effectué par de l'air chaud amené à la face intérieure de l'hélice de tuyau, et l'air chaud se répartit régulièrement sur la circonférence de la gaine tubulaire (1).

10. Utilisation selon l'une quelconque des revendications 5 à 9, **caractérisée en ce que** la gaine tubulaire (1) est chauffée avant son entrée dans l'outil de cintrage (3) et/ou depuis l'extérieur à l'intérieur de l'outil de cintrage (3).

Fig. 1

Fig. 2

Fig. 3

EP 3 639 669 B1

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4339337
- EP 530538 A
- DE 19650873 A1
- EP 0878318 A1
- EP 0744273 A1
- DE 19607340 A1